# EUROPEAN PATENT APPLICATION

(11) **EP 1 767 798 A1**
(43) Date of publication of application: **28.03.2007**
(21) Application number: 05020778.6
(22) Date of filing: 23.09.2005
(51) Int. Cl.: F16C 32/04

(54) **Superconducting magnetic bearing**

(71) Applicant: Nexans, 75008 Paris (FR)
(72) Inventor: Walter, Heribert, 37081 Göttingen (DE); Bock, Joachim, 50374 Erftstadt (DE)
(74) Representative: Feray, Valérie

(57) **Abstract**

The present invention is directed to a superconducting magnetic bearing which comprises at least one annular disc-shaped high temperature superconductor 4 and at least one annular disc-shaped exciting system 1 with a permanent magnet 10 wherein the at least one annular disc-shaped exciting system 1 is axially mounted to a rotor 2 and the at least one annular disc-shaped high temperature superconductor 4 axially surrounds the rotor and is spaced away from the exciting system 1 in axial direction, and wherein activation is effected by radially moving the at least one annular disc-shaped superconductor 4 relative to the rotor 2.

## Description

The present invention is directed to a magnetic bearing comprising a rotating element, e.g. a shaft, within a stator element with a high temperature superconductor wherein the rotating element is held in a contactless state of suspension by magnetic forces.

If a high temperature superconductor is located in the field of a permanent magnet at a temperature above its transition temperature Tc, a magnetic flux will pass therethrough. If, in this case, the superconductor is cooled to a temperature below Tc then a portion of the magnetic flux will remain frozen into the superconducting material. In the event of position change due to field changes shielding currents are induced in the superconductor by the permanent magnet which counteract the change of position. The resulting forces may be repulsive or attractive but are directed such that they counteract any deflection from the cooling position.

Using this principle non-contact making and, thus, essentially frictionless, self stabilizing magnetic bearings can be constructed.
Such bearings contain arrangements of permanent magnets as exciter system and a high temperature superconductor.

A generic bearing is disclosed in DE 44 36 831 C2. In general, such bearings comprise the following parts:
A first bearing part tightly attached to a shaft and being surrounded by a second, fixed positioned bearing part, wherein the second bearing part is associated with a stator, and a bearing gap is formed between the first and second bearing parts. The first bearing part contains an arrangement of a plurality of alternately polarized permanent magnets between which there are ferromagnetic elements. The second bearing part contains a superconducting structure, and a cooling apparatus for cooling the superconducting structure below Tc of the superconductor material. Here, the first bearing part is formed of a large number of permanent magnets which are in the form of annular discs and are located one after the other in the axial direction on the rotor shaft. These elements are polarized such that the polarisation alternates when seen in the axial direction of the shaft. Comparatively thin ferromagnetic intermediate elements are arranged in each case between adjacent permanent magnets. These ferromagnetic intermediate elements serves as flux collection pole and magnetically concentrate the magnetic lines or force of adjacent permanent magnets, so that a particularly high magnetic field strength is produced on the side of each intermediate element which faces the bearing gap. This first bearing part of the rotor body with its magnet arrangement composed of permanently magnetic elements, is surrounded by the second fixed-position bearing part of the stator. This second bearing part contains a superconducting structure.

In the above arrangement since the stator element with the superconductor surrounds essentially concentrically the rotor element with the exciter system upon cooling below Tc the magnetic force generated keep the rotor element at its position in free suspension.
However, the actual position of the rotor element after cooling depends also on the own weight of the rotor element as well as the working load generally causing a deflection of the rotor element from the position at cooling to the so called working position.

To obtain stable and stiff bearing of the rotor element the strength of the magnetic forces acting between the superconductor and the exciter system should be desirably as high as possible.

Generally, the stiffness of such bearings is substantially influenced by the specific cooling method, the design of the exciter system and the quality of the superconductor material, in particular the critical current density. The present invention refers to the former two aspects.

Basically three cooling methods are referred to in the art, which distinguishes by the position of the superconductor relative to the exciter system (activation distance) during cooling:
1. If the activation distance is relatively large (Zero Field Cooling = ZFC) so that virtually no magnetic field acts on the superconductor during cooling in the result repulsive forces are obtained which increase progressively on approach.
2. If the activation distance is close during cooling (Maximum Field Cooling = MFC) on being moved away from each other, at first, attracting forces are obtained which increase until a maximum and, then, decrease.
3. According to a third method, during cooling the superconductor is near to the intended working position. Here cooling is done under the operational field in the working position or with displacement into the working position (operational field cooling OFC) and operational field cooling with offset (OFCo).
   Taking into account the force-distance characteristics of the bearing a stable and stiff bearing of the rotor element or any other element to be supported requires displacement from the activation position to the working position by forces, such as the element's own weight or by the operational load. At this working position the forces which act in the bearing are in balance.

In the following the present invention will be explained in detail with reference to the figures for a better illustration. It is shown in
- **figure 1**: the general design of a superconducting magnetic bearing;
- **figure 2a**: a cross-section of an exciter system with the distribution of the magnetic field without a superconductor; and
- **figure 2b**: a cross-section of an exciter system with the distribution of the magnetic field with a superconductor;
- **figure 3**: an assembly of a first embodiment of a superconducting magnetic bearing according to the present invention; and
- **figure 4**: a further embodiment of the present invention.

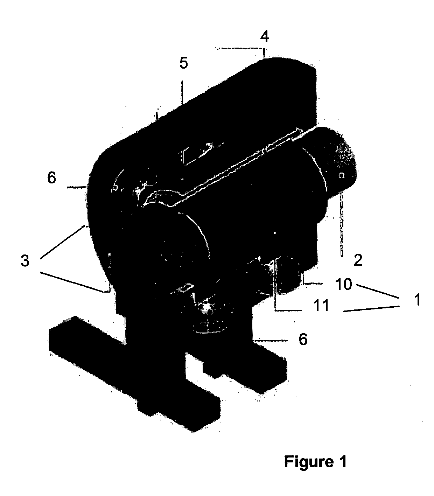

In **figure 1** the general construction of a superconducting bearing assembly for rapidly rotating shafts is shown. The exciter system 1 with its arrangement of alternating permanent magnets 10 and flux collection poles 11 mounted to the shaft 2 is positioned within the warm bore of a dewar 3 and a cylindrically shaped superconductor 4 mounted to a cold head 5 within the dewar.
Supports 6 are provided for supporting the part with the superconductor 4 towards the interior of the dewar wall.

By the exciter system 1 on the shaft 2 the bearing effective area is determined and, thus, the resulting stiffness which can be obtained.

As set out above, for activating the bearing forces a certain movement of the bearing parts relative to each other is required. However, due to the constructional constraints in many application the available degree of freedom for movement is only limited. This limited moving freedom brings about that in order to obtain the required stiffness at the working position a correspondingly large bearing effective area (length and/or diameter) must be provided, with high costs and dimensions.

For solving this problem it is suggest in WO 02/06688 A1 to divide the cylindrical superconductor into at least two circle segment-shaped partial shells which can be displaced with respect to each other in radial direction and can be shifted by a defined distance upon cooling. By the shift of the partial shells the magnetic forces and stiffness, respectively, can be activated for compensating the weight of the rotor.

However, there are several problems associated with such a movable arrangement within the tightly sealed cooling chamber of a dewar. For driving the partial shells a mechanical connection is necessary between the partial shells within the cryogenic area of the dewar and an actuator positioned outside the insulated cryogenic dewar area. However, the provision of a connection between the warm outside and the cooled interior of a dewar is not only demanding from a constructional point of view but also with respect to the material.
On the other side if the actuator is positioned within the cryogenic area of the dewar there are difficulties due to the space limitation as well as associated with the vacuum conditions. For example, in case of any defect the tightly sealed cryogenic area of the dewar must be opened, and, after repair, again sealed with the necessary tightness.

Furthermore, there are difficulties in the construction of the mechanical supports necessary for the movable partial superconducting shells in view of the thermal expansion. For reliable operation dimensional stability of such supports is required. Considering the high temperature differences between the warm and the cold state a material has to be used with a suitably low thermal expansion coefficient.

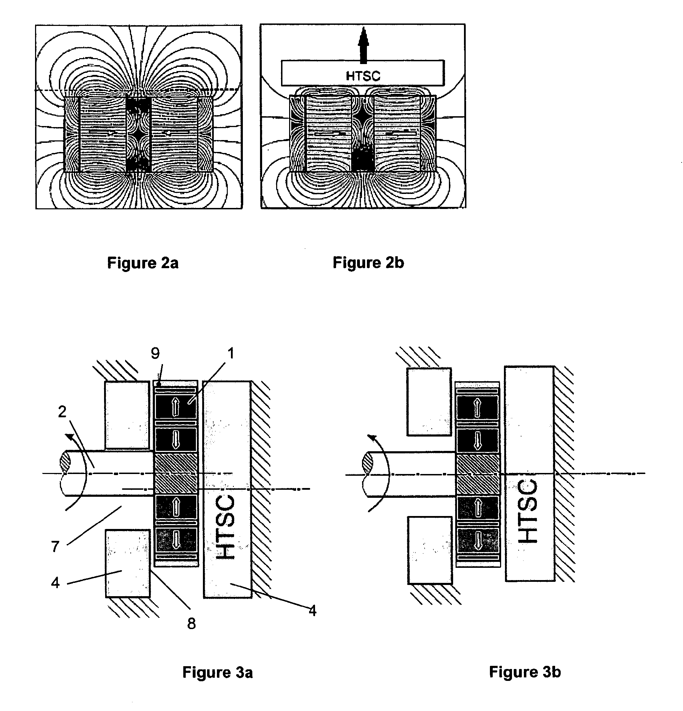

Apart from the design the quality of a bearing is influenced by the distribution of the magnetic field of the exciter system with permanent magnets and flux collection poles. The field generated by such exciter system is inherently symmetrically as shown in **Figure 2a**.
Consequently a considerable amount of the field is directed towards a side opposite to the superconductor. Moreover, on approaching of the superconductor towards the exciter system flux is pushed away from the effective area to sides not participating in the interaction of the superconductor and the exciter system (leakage sides) as shown in **Figure 2b**.

For improving the utilisation of the flux and for minimizing the leakage of the flux the use of so - called control magnets is suggested having a non symmetrical field distribution. In such control magnets flux within the leakage area is pushed into the effective area and contributes to the enhancement of the interaction between the superconductor and the exciter system.
However, production of such control magnets is laborious and costly.

Further, there is a constructional factor affecting the flux within the effective area of a bearing.
Referring to figure 1 usually the exciter system 1 is sheathed by a reinforcing layer (not shown) for counteracting centrifugal forces generated during operation and, in doing so sustaining the exciter system 1. For fixing the reinforcing layer on both ends of the exciter system 1 - composed of alternating permanent magnets and flux collection poles - flux collection poles are provided. However, by the arrangement of flux collection poles on both ends field leakage is enhanced and the forces acting between the exciter system and the superconductor are reduced.

In view of the above it was the object of the present invention to provide a design for a superconducting magnetic bearing which can be activated without additional construction, in particular mechanical construction, within the cryogenic area.

It was a further object of the present invention to provide a better utilisation of the magnetic field of the exciter system making possible an enhancement of the stiffness of the bearing.

According to a first aspect of the present invention a superconducting magnetic bearing for holding a rotor in a flotating condition is provided which comprises at least one annular disc-shaped high temperature superconductor and at least one annular disc-shaped exciter system with the permanent magnet wherein the at least one annular disc-shaped exciter system is axially mounted to the rotor, the at least one annular disc-shaped high temperature superconductor axially surrounds the rotor and being spaced from the exciter system in axial direction by a bearing gap being formed between the at least one annular disc-shaped high temperature superconductor and the exciter system, wherein the at least one annular disc-shaped high temperature superconductor is housed within a cooling device, wherein the cooling device with the superconductor is radially spaced from the rotor by a radial gap, wherein the cooling device with the annular disc-shaped high temperature superconductor is radially movable relative to the rotor, and/or wherein the cooling device with the high temperature superconductor is axially movable relative to the at least one annular disc-shaped exciter system, and/or wherein the exciter system is axially movable relative to the cooling device with the high temperature superconductor.

According to a further aspect of the present invention the superconducting magnetic bearing of the present invention comprises a further annular disc-shaped high temperature superconductor which is arranged on the side of the exciter system opposite to the first annular disc-shaped high temperature superconductor.

According to the present invention the high temperature superconductor has the overall shape of an annular disc and is arranged around the rotor with a radial gap and is axially spaced from the exciter system.

Activation of a first embodiment of the present superconducting magnetic bearing is shown in figures 3a and 3b with figure 3a showing the superconductor 4 in the activation position and figure 3b in the working position.

As is apparent from **figures 3a and 3b** by the configuration according to this first embodiment of the present invention activation of the bearing forces is possible by simply shifting the complete annular disc-shaped high temperature superconductor 4 in radial direction relative to the rotor 2. That is, according to the present invention the lateral forces of the superconductor arrangement are used for generating the radial forces and stiffness required for the bearing.

The superconductor 4 is housed within a cooling device for cooling the superconductors, such as a cryostat, a dewar or similar means and can be cooled down to working temperature by any suitable cooling system such as cryogenic cooling, liquid nitrogen convection. As is understood within the present specification the term "cryostat" can mean any suitable cooling device.

Shifting of the annular disc-shaped superconductor 4 is done by simply shifting the cryostat as such in radial direction relative to the rotor. According to the present invention there is no need for providing any means for mechanical movement of the high temperature superconductor element 4 as such or of providing an actuator within the cryostat.

That is, it is not the high temperature superconductor which is driven but the cryostat surrounding the superconductor is moved.

The width of the radial gap 7 between the annular disc-shaped superconductor 4 and the rotor 2 is not particularly critical and is selected depending on the overall dimensions of the bearing and is such that the desired lateral forces are generated.

Preferably, as shown in figure 3b the forces acting within the bearing are balanced such that at the working position the rotor 2 is coaxially surrounded by the annular disc-shaped high temperature superconductor 4.

Since activation can be effected by a radial shift of the cryostat with the superconductor 4 the bearing gap 8 formed between the annular high temperature superconductor 4 and the exciter system 1 is not involved in the movement for activation. Since the bearing gap 8 is independent from the movement it can be selected as small as possible.

Thus, according to the present invention the distance between the exciter system 1 and the superconductor 4 which is determined by the bearing gap 8, can be kept very small during cooling.
A distance as small as possible during cooling is energetically advantageous and results in an enhancement of the forces generated. Consequently, the stiffness of such a bearing is further improved compared to a common bearing arrangement with the superconductor surrounding the exciter system cylindrically as shown in figure 1.

According to a further aspect of the present invention and as shown in figures 3a and b the exciter system 1 is sandwiched between two annular disc-shaped high temperature superconductors 4. Due to this sandwich arrangement also the magnetic field opposite to the side of the first annular high temperature superconductor can be utilized for the bearing in addition to the field extending on the side of the first superconductor. Since by this sandwich arrangement an improved utilisation of the exciter system is achieved it is possible to make the exciter system substantially more compact than shown for example, in the prior art embodiment of figure 1 without loss of stiffness.

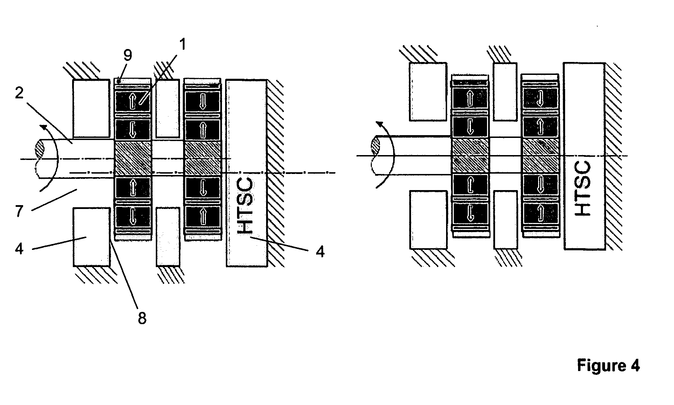

The basic sandwich arrangement shown in figures 3a and 3b can be periodically repeated in axial direction according to need in order to further enhance the stiffness of the bearing as shown in figures 4a and 4b. Such multiple bearings are particularly useful for ensuring sufficient stiffness for rapidly rotating shafts, e. g. for overcoming stability problems which as yet limit the admissible circumferential speed.

As only indicated in figures 3a and 3b each of the high temperature superconductors 4 in such multiple bearing is housed in a cryostat or similar means for cooling the superconductor.

For counteracting centrifugal forces the exciter system 1 can be provided with a reinforcing layer 9 of a suitable material, usually made of steel, titanium etc. and, particularly, of carbon fibre reinforced plastic (CFRP). If such a reinforcing layer is applied onto the exciter system of a prior art bearing as shown in figure 1 with the superconductor surrounding the exciter system cylindrically the thickness of the reinforcing layer 9 contributes to the width of bearing gap and results in a widening of the bearing gap. To the contrary, according to the present invention, as shown in figures 3 and 4, any reinforcing layer 9 provided on the outer surface of the exciter system 1 does not affect the bearing gap 8 between the high temperature superconductor 4 and the exciter system 1. Consequently according to the present invention, even if a reinforcing layer 9 is provided there is no influence on the bearing gap and there is no need to widen the bearing gap 8 due to the provision of a reinforcing layer 9, so that the bearing gap can be maintained at an energetically advantageous small width.

Preferably, the bearing gap 8 can have a slight conical inclination.

The orientation of the broader diameter of the cone is not critical and can be directed either towards the rotor 2 or towards the opposite direction.

By the provision of such conical bearing gap the wall of the cryostat can achieve a significant improvement in form - stability which, in turn, results in an improvement of the thermal insulating properties. This is particularly advantageous for thin cryostat walls which are liable to deformation on applying vacuum in the cryostat.

Since the cone angle is only small, for example about 5°, the change of the width of the bearing gap 8 during radial shift of the cryostat with the high temperature superconductor 4 is only small and can be easily taken into consideration on construction of the cryostat.
It is also possible to adapt the surface of the high temperature superconductor 4 for achieving the desired conical shape of the bearing gap 8, for example by mechanical treatment such as grinding or providing steps.

In the plane bearing arrangement of the present invention the bearing gaps 8 or at least one or more of them can be used for different advantageous application purposes.

For example in the plane bearing arrangement of the present invention the bearing gaps 8 or at least one or more of them can be additionally used for sealing purposes. For example a suitable sealing or insulating material can be provided within the bearing gaps 8. According to need part of the bearing gaps 8 can be filled an insulating material and part of them with a sealing material. Also further suitable combinations are possible. Any sealing or insulating material commonly known in the art can be used.

The provision of any sealing or insulating material also contributes to the stiffness of the bearing arrangement which is of further advantage.

One or more bearing gaps 8 can be designed to form a gas lubricated axial bearing.

The sealing or insulation can be improved by providing a profile into the outer surface of the cryostat or the surface of the exciter system 1 or of both of them, for example, by providing a spiral groove structure.

In particular, the profile is provided into a surface involved in sealing or insulation purposes, e.g. a surface directed towards a bearing gap 8 or towards the rotor 2 or towards both of them.

The bearing gap 8 can be further used for compensation of the axial thrust, which is particularly advantageous in turbo machines.

According to a preferred further embodiment the annular disc-shaped superconductors 4 can be composed of a plurality of superconducting single elements. The single elements are joint together without interrupting the superconductivity at the joints. Methods for superconductive joining of superconducting elements, for example of massive superconducting elements, are known in the art.

Preferably in the joint superconductor the crystallographic c-axes of the single elements are parallel to each other and in parallel to the rotating axis of the rotor.
By the parallel orientation of the c-axis stiffness is further enhanced.

According to the present invention activation of the supermagnetic bearing is not restricted to a radial shift of the cryostat with the superconductor but can be accomplished in different ways.
According to a further embodiment activation can be accomplished by an axial shift of the cryostat with the superconductor towards the exciter system 1. That is, either the cryostat or the exciter system 1 or both are axially movable toward each other, so that for cooling the bearing gap 8 is broadened by shifting away the cryostat with the superconductor 4 and/or the exciter system 1 and, then approaching the cryostat with the superconductor 4 and/or the exciter system 1 to the working position.

According to the present invention activation can be done by a radial shift of the cryostat with the superconductor 4 and the rotor 2 relative to each other or via axial shift of the cryostat with the superconductor 4 and the exciter system 1 relative to each other or by a combination.
Thus, it is possible to select the way of activation according to the need of the specific application intended.

As briefly referred to above, for obtaining the desired shape of the superconductor component used in the bearings single superconductor elements are joined together.
This is in particular necessary in case of relatively large superconductor components such as a cylinder, which are difficult to be produced in the desired quality in form of a single component.

For obtaining the required length of such a cylinder a plurality of single superconductor elements must be stuck on top of each other. In order to obtain a round form of the inner bore finishing of the inner wall of the obtained cylinder is necessary. Such finishing is usually done by grinding, turning etc., which means a loss of costly superconductor material.

For the present invention planar superconductor components can be used, having a considerably less length, that is height, than a component with cylindrical shape.

Thus, the planar configuration of the present invention is composed of only a few layers of single superconductor elements, preferably the planar configuration consists of only one layer of single superconductor elements. That is, according to the present invention the superconductor component is composed of single elements joined together in the plane but require no stacking or only stacking with few layers.

In such planar annular arrangement the inner surface, that is the surface of the bore, is usually sufficiently smooth and requires no or only little finishing.

### Reference number list

- 1: exciter system
- 2: shaft / rotor
- 3: dewar
- 4: superconductor
- 5: cold head
- 6: support
- 7: radial gap
- 8: bearing gap
- 9: reinforcing layer

- 10: permanent magnet
- 11: flux collection pole

## Claims

1. Superconducting magnetic bearing for holding a rotor in a floating condition comprising at least one annular disc-shaped high temperature superconductor (4) and least one annular disc-shaped exciter system (1) with the permanent magnet (10),
**wherein** the at least one annular disc-shaped exciter system (1) is axially mounted to the rotor (2), the at least one annular disc-shaped high temperature superconductor (4) axially surrounds the rotor (2) and being spaced from the exciter system (1) in axial direction by a bearing gap (8) which is formed between the at least one annular disc-shaped high temperature superconductor (4) and the exciter system (1),
**wherein** the at least one annular disc-shaped high temperature superconductor (4) is housed in a cooling device,
**wherein** the cooling device with the superconductor (4) is radially spaced from the rotor by a radial gap (7), and
**wherein** the cooling device with the high temperature superconductor (4) is radially movable relative to the rotor (2), and/or
**wherein** the cooling device with the high temperature superconductor (4) is axially movable relative to the at least one annular disc-shaped exciter system (1), and/or
**wherein** the exciter system (1) is axially movable relative to the cooling device with the high temperature superconductor (4).

2. Superconducting magnetic bearing according to claim 1,
additionally comprising a further annular disc-shaped high temperature superconductor (4) which is provided on the side of the exciter system (1) opposite to the first annular disc-shaped high temperature superconductor (4).

3. Superconducting magnetic bearing according to claim 1 or 2,
comprising a plurality of annular disc-shaped high temperature superconductors (4) and annular disc-shaped exciter systems (1) which are arranged alternately in axial direction to the rotor (2).

4. Superconducting magnetic bearing according to any of the preceding claims,
**wherein** the at least one annular disc-shaped high temperature superconductor (4) is composed of a plurality of single superconducting elements.

5. Superconducting magnetic bearing according to claim 4,
**wherein** in the annular disc-shaped high temperature superconductor (4) the single superconducting elements are joint together with the crystallographic c-axis of the single superconducting elements being in parallel to each other and being in parallel to the rotating axis of the rotor (2).

6. Superconducting magnetic bearing according to any of the preceding claims,
**wherein** at least one of the bearing gaps (8) has a conical inclination.

7. Superconducting magnetic bearing according to any of the precedings claims
**wherein** at least one of the bearing gaps (8) is filled with a material selected from an insulating material and a sealing material.

8. Superconducting magnetic bearing according to claim 7,
**wherein** one or more of the bearing gaps (8) is filled with an insulating material and one or more of the remaining bearing gaps (8) is filled with a sealing material.

9. Superconducting magnetic bearing according to any of the preceding claims,
**wherein** the surface of the cooling device housing the superconductor (4) is provided with a profile at least on the side facing the rotor and/or the bearing gap (8).

10. Superconducting magnetic bearing according to any of the preceding claims,
**wherein** at least one surface of one or more exciter system (1) facing a bearing gap (8) is provided with a profile.

11. Superconducting magnetic bearing according to claim 9 or claim 10,
**wherein** the profile has a spiral groove structure.

12. Superconducting magnetic bearing according to any of the preceding claims,
**wherein** a reinforcing layer (9) is provided on one or more annular disc-shaped exciter system (1).

13. Superconducting magnetic bearing according to any of the preceding claims,
**wherein** one or more of the bearing gaps (8) is used for compensation of axial thrust.

## Amended claims

### Amended claims in accordance with Rule 86(2) EPC.

**1.** Superconducting magnetic bearing for holding a rotor in a floating condition comprising at least one annular disc-shaped high temperature superconductor (4) and least one annular disc-shaped exciter system (1) with the permanent magnet (10),
**wherein** the at least one annular disc-shaped exciter system (1) is axially mounted to the rotor (2), the at least one annular disc-shaped high temperature superconductor (4) axially surrounds the rotor (2) and being spaced from the exciter system (1) in axial direction by a bearing gap (8) which is formed between the at least one annular disc-shaped high temperature superconductor (4) and the exciter system (1),
**wherein** the at least one annular disc-shaped high temperature superconductor (4) is housed in a cooling device,
**wherein** the cooling device with the superconductor (4) is radially spaced from the rotor by a radial gap (7), and
**wherein** the cooling device with the high temperature superconductor (4) is movable in radial direction relative to the rotor (2) for force activation.

**2.** Superconducting magnetic bearing according to claim 1, additionally comprising a further annular disc-shaped high temperature superconductor (4) which is provided on the side of the exciter system (1) opposite to the first annular disc-shaped high temperature superconductor (4).

**3.** Superconducting magnetic bearing according to claim 1 or 2, comprising a plurality of annular disc-shaped high temperature superconductors (4) and annular disc-shaped exciter systems (1) which are arranged alternately in axial direction to the rotor (2).

**4.** Superconducting magnetic bearing according to any of the preceding claims,
**wherein** the at least one annular disc-shaped high temperature superconductor (4) is composed of a plurality of single superconducting elements.

**5.** Superconducting magnetic bearing according to claim 4,
**wherein** in the annular disc-shaped high temperature superconductor (4) the single superconducting elements are joint together with the crystallographic c-axis of the single superconducting elements being in parallel to each other and being in parallel to the rotating axis of the rotor (2).

**6.** Superconducting magnetic bearing according to any of the preceding claims,
**wherein** at least one of the bearing gaps (8) has a conical inclination.

**7.** Superconducting magnetic bearing according to any of the precedings claims
**wherein** at least one of the bearing gaps (8) is filled with a material selected from an insulating material and a sealing material.

**8.** Superconducting magnetic bearing according to claim 7,
**wherein** one or more of the bearing gaps (8) is filled with an insulating material and one or more of the remaining bearing gaps (8) is filled with a sealing material.

**9.** Superconducting magnetic bearing according to any of the preceding claims,
**wherein** the surface of the cooling device housing the superconductor (4) is provided with a profile at least on the side facing the rotor and/or the bearing gap (8).

**10.** Superconducting magnetic bearing according to any of the preceding claims,
**wherein** at least one surface of one or more exciter system (1) facing a bearing gap (8) is provided with a profile.

**11.** Superconducting magnetic bearing according to claim 9 or claim 10,
**wherein** the profile has a spiral groove structure.

**12.** Superconducting magnetic bearing according to any of the preceding claims,
**wherein** a reinforcing layer (9) is provided on one or more annular disc-shaped exciter system (1).

**13.** Superconducting magnetic bearing according to any of the preceding claims,
**wherein** one or more of the bearing gaps (8) is used for compensation of axial thrust.

**14.** Method for force activation of a superconducting magnetic bearing of any of claims 1 to 13,
**wherein** the high temperature supercondcutor (4) is displaced from its operational position to a cooling position spaced apart from the operational position during cooling by movement of the cooling device housing the high temperature superconductor (4) in radial direction relative to the exciter system (1) with the rotor (2).

**15.** Method according to claim 14,
**wherein** the width of the bearing gap (8) between high temperature supercondcutor (4) and exciter system (1) is kept constant during cooling and operation of the superconducting magnetic bearing.

**16.** Method according to claim 15,
**wherein** the bearing gap (8) is held constantly as small as possible.
